Europäisches Patentamt

European Patent Office

Office européen des brevets

(19)

(11) Publication number: **0 139 028**
**B1**

(12) **EUROPEAN PATENT SPECIFICATION**

(45) Date of publication of patent specification: **07.10.87**

(51) Int. Cl.⁴: **A 23 L 1/16**

(21) Application number: **83110420.3**

(22) Date of filing: **19.10.83**

(54) Process for the preparation of farinaceous products.

(43) Date of publication of application:
**02.05.85 Bulletin 85/18**

(45) Publication of the grant of the patent:
**07.10.87 Bulletin 87/41**

(84) Designated Contracting States:
**BE CH DE FR GB IT LI LU NL SE**

(56) References cited:
**US-A-3 082 092**
**US-A-4 073 958**

**FOOD SCIENCE & TECHNOLOGY ABSTRACT no. 79027029**

**FOOD SCIENCE & TECHNOLOGY ABSTRACT no. 73046485**

**GETREIDE, MEHL UND BROT, vol. 33, II, 1979, pages 299-302; A. MENGER: "Erfahrungen mit nicht nur aus Durumweizen hergestellten Teigwaren"**

**The file contains technical information submitted after the application was filed and not included in this specification**

(73) Proprietor: **Fejér Megyei Gabonaforgalmi és Malomipari Vállalat**
**3, Petöfi Sándor u.**
**H-8000 Székesfehérvár (HU)**

(73) Proprietor: **Aranykalász MGTSZ**
**Vörös tér 3**
**H-2301 Ráckeve (HU)**

(73) Proprietor: **MTA Mezögazdasági Kutato Intézet**
**H-2462 Martonvásár (HU)**

(72) Inventor: **Alapi, József, Dr.**
**16. Oltó u.**
**H-1108 Budapest (HU)**
Inventor: **Baldaszti, László, Dr.**
**4. Reviczky u.**
**H-2432 Gárdony (HU)**
Inventor: **Gáspár, László, Dr.**
**1. Marx tér.**
**H-2462 Martonvásár (HU)**
Inventor: **Herczegh, Márton, Dr.**
**7. Vorosilov u.**
**H-2462 Martonvásár (HU)**
Inventor: **Jávorka, István**
**9. Felsöerdösor u.**
**H-1068 Budapest (HU)**
Inventor: **Kisberk, Ferenc, Dr.**
**33. Palotai u.**
**H-8000 Székesfehérvár (HU)**

Courier Press, Leamington Spa, England.

**0 139 028**

(56) References cited:
PATENTS ABSTRACTS OF JAPAN, vol. 5, no.
114 (C-64)786r, 23rd July 1981
CHEMICAL ABSTRACTS, vol. 95, no. 1, July
1981, page 525, no. 5408k, Columbus, Ohio, US

(72) Inventor: **Klauser, János, Dr.**
**48. Pintér Károly lakótelep**
**H-8000 Székesfehérvár (HU)**
Inventor: **Makk, Antal**
**8. Ugor u.**
**H-1105 Budapest (HU)**
Inventor: **Pallos, István, Dr.**
**11. Dózsa György tér**
**H-8000 Székesfehérvár (HU)**

(74) Representative: **Hansen, Bernd, Dr.rer.nat. et al**
**Hoffmann, Eitle & Partner Patentanwälte**
**Arabellastrasse 4**
**D-8000 München 81 (DE)**

# 0 139 028

**Description**

This invention relates to new farinaceous products and a process for the preparation thereof, particularly for the preparation of vermicelli and pastes for cold-storage industry.

Farinaceous products—namely farinaceous foodstuffs obtained by admixing flour, water and optionally eggs and other additives used in the manufacturing of pastes, and subsequent kneading, forming and optionally cooking and/or drying—must comply with a number of requirements. Thus the said pastes must have a short cooking time, a large swelling grade, expressed in the amount of water taken up during cooking, should not boil to rags during cooking and the losses occurring during cooking must be small. The paste must have suitable organoleptic properties; its shape, form, colour, surface, structure, smell, taste and post-cooking state must be satisfactory. A further requirement resides in the storability for a long period of time.

It is both the interest of the consumers and the authorities that the farinaceous products (pastes) should meet the above requirements at a high level. Several attempts were made to improve the quality of pastes. Thus it is necessary to use suitable flour for the manufacturing of pastes. The flour of durum type wheats having a high gluten content proved to be much more advantageous than that of aestivum type wheats. The cultivation of durum type wheat is however limited by weather, soil and geographical factors and for this reason flour required for the manufacturing of farinaceous products is either expensive or even not at all available.

When grist of aestivum wheat having a low gluten content is used, the protein content of the paste can be increased by the addition of eggs. This method is however accompanied by the drawback that eggs can be the source of infections,—particularly of Salmonella infections—and for this reason the use of eggs for this purpose is prohibited by the authorities of several countries.

One or more properties of paste can be improved with the aid of certain additives. Thus lupine flour (Journal of Food Science 45, 2, 404—405), pea meal (Cereal Chemistry 57, 3, 203—206), skimmed milk (Japanese patent specification No. 55.49814) or soya meal can be used for this purpose. The said additives improve the cooking characteristics of the paste (e.g. the cooking time is shortened). The colour of the paste can be improved by using by-products of maize starch production (British patent specification No. 1.584.828). In order to shorten the cooking period sodium hydrogen carbonate and an acid are added (Japanese patent specification No. 52.24577). The general cooking characteristics can be improved by adding sodium alginate, calcium glyconate and pot-ash (Russian patent specification No. 315.913). The use of the said additives is however restricted by the fact that these properties are improved to the detriment of other ones, particularly when the additives are used in a large amount.

According to another method, the cooking period is shortened and the losses occurring during cooking are reduced by treating the crude paste with vapour or drying the same at a high temperature above 70°C (US patent specifications Nos. 4.230.735, 4.243.689 and 4.243.690; Swiss patent specification No. 473.538 and, Cereal Industry 56, 5, 394 (1979) and Supplementa Alla Gasetta Ufficuale Nr. 254, 30-9-74). As a result of the said thermal treatment the proteins coagulate and this gives beneficial results. This process is however not competitive on industrial scale because of the high energy demand.

In the abstracts of JP—A—5 328 493 and JP—A—4 807 342, in "Food, Science and Technology Abstract", Nos. 79027029 and 73046485 respectively, the use of waxy corn starch is disclosed in the production of noodles. Furthermore, there is disclosed in US—A—4 073 958 a process for the preparation of rice-flavoured snack food, comprising waxy corn starch or waxy grits with rice bran as flavourant. It is mentioned that the product obtained from corn dough has "some unpleasant and strange smells that must be overcome for successful marketing".

The object of the present invention is to provide a farinaceous product and a process which is suitable for the production of pastes having high quality in spite of the above difficulties. It is a further object of the present invention to enable the manufacturing of farinaceous products of high quality without using aestivum type wheat grist and/or eggs.

The invention relates to a farinaceous product which is characterized in that it comprises 5—40% by weight of flour containing a hybrid maize grist which has a starch fraction including at least 95% of amylopectin, water, optionally eggs and additives generally used in paste production.

Hitherto maize flour was held to be unsuitable for the production of paste. According to the prior art [Getreide, Mehl und Brot, Vol 33, II pages 299—302] a paste which comprises maize grist does not form a coherent mass during kneading, it is difficult to be worked up and the farinaceous products prepared therefrom do not comply with the requirements. The vermicelli obtained therefrom easily crumbles, gets broken, the cooked paste is not sufficiently resilient and boils to rags. According to the conclusions drawn from prior art maize grist can only be added to the meal of durum wheat and in an amount not higher than 10%, because otherwise the cooking characteristics of the paste are adversely and unfavourably effected.

On subjecting the applicability of hybrid maize flour to profound studies it has been found that from the point of view of the quality of the paste the amylopectin content of the starch fraction of maize is of particular significance. The said amylopectin content prevents the desintegration of the starch particles during cooking, and consequently the starch gets not washed out. It has also been found that the hybrid protein structure of maize having a high amylopectin content differs from that of other maize species.

3

Namely in this case the starch particles are surrounded by the protein to a larger extent and in a more resilient manner.

Amylopectin which has a high molecular weight and a cross-linked structure plays in the formation of the structure of the paste a similar role as gluten protein and ensures the coherent structure.

The amylopectin-protein structure which is indispensable and of outstanding importance from the point of view of paste production can however only be formed if a hybrid maize grist is used which comprises a starch fraction containing at least 95% of amylopectin.

According to the process of the present invention it is preferred to use in the above-mentioned amount hybrid maize ground to a particle size generally used in paste production, i.e. to 100—500 microns, preferably to 200—400 microns, particularly to 260—340 microns. The preparation of such grist does not require special equipment or technology of milling industry. One may proceed preferably by admixing hybrid maize grist with wheat flour under dry conditions and subjecting the mixture to usual technological steps; the flour is admixed with water and optionally with eggs, egg-powder or egg-fluid, respectively and to the mass the optional additives are added. As additives e.g. phosphates or carbonates can be used which shorten the cooking period or vitamins or sodium chloride can be applied. The mass is kneaded in a suitable kneading machine, then shaped to the desired form (e.g. it is extruded to a macaroni) and if vermicelli is to be prepared it is dried. According to the process of the present invention high-temperature drying is eliminated. This step is however necessary if pastes of some specific quality are to be prepared.

A preferred process of the present invention is described below:

Wheat flour is admixed with hybrid maize grist and from the mixture thus obtained a mass containing about 30% of water is prepared by adding warm water (70°C). The mass is kneaded homogeneously and formed on a paste press at a temperature of about 40°C. The crude paste is dried in an air-conditioned box at 75—80°C. A paste which can be preserved by deep-freezing is obtained in an analogous manner. In this case the water-content of the mass is adjusted to about 40—50% and the crude paste obtained after forming is not dried but cooked at a temperature of 90—100°C for about 5 minutes. The product thus obtained is packed and preserved by deep-freezing.

The paste prepared by the above process has a nice yellow colour and possesses outstanding properties. It can be cooked within a short period of time and the cooked paste is resilient and not sticky.

The advantage of the present invention is that it provides a simple and economical process for the productions of farinaceous products of outstanding quality. According to the present invention starting from aestivum wheat grist and without the use of eggs a paste of such quality can be prepared which could be obtained by known methods only from the grist of durum wheat or by using eggs, respectively. The cooking time of the paste prepared by the process of the present invention is shorter than that of the product obtained by conventional methods and therefore the energy demand of this paste is lower. The present invention eliminates the use of eggs and this leads to the production of farinaceous products which can be stored for a long period of time and do not give rise to Salmonella infections. The cold-storage paste products prepared according to the present invention can be readily and conveniently stored by deep-freezing. The other properties of the products obtained by the process of the present invention are excellent too as it is demonstrated by the comparative experiments disclosed in the Examples.

Further details of the process are illustrated by the following Examples without limiting the scope of protection to the said Examples.

Example 1

85 kg of aestivum wheat grist are admixed with 15 kg of waxy hybrid maize grist, the starch fraction thereof containing 99% of amylopectin. To the dry product warm water (70°C) is added and the mixture is kneaded in a Z-armed mixer for 10 minutes. The mass is kneaded homogeneously, whereupon it is shaped in a Pavanti type paste press at 40°C under a pressure of 120 bar (120 kg/cm$^2$). The crude paste thus obtained is dried at 75°C. The paste thus obtained has a nice yellow colour and can be stored without any deterioration for at least a year.

Example 2

One proceeds according to Example 1 except that a mixture of 80 mg of aestivum wheat grist and 20 kg of waxy hybrid maize grist is used. The paste thus obtained is similar to that prepared by Example 1, it has a somewhat yellower colour and can be stored for an equally long period of time.

Example 3

One proceeds according to Example 1 except that 75 kg of aestivum wheat grist and 25 kg of waxy hybrid maize grist is used. The paste thus obtained has a yellow colour and is well storable.

Example 4

70 kg of aestivum wheat grist are admixed with 15 kg of durum wheat grist and 15 kg of waxy hybrid maize grist. The mixture is worked up as described in Example 1. The paste thus obtained is of a brownish yellow colour and storable.

Example 5

85 kg of aestivum wheat grist are admixed with 15 kg of waxy hybrid maize grist. The mixture is worked up as described in Example 1 except that an amount of egg-powder corresponding to 20 eggs is added to the mass prior to homogenisation.

Example 6

75 kg of aestivum wheat grist are admixed with 25 kg of waxy hybrid maize grist. The mixture is worked up as described in Example 1 except that an amount of egg-fluid corresponding to 40 eggs is added to the mass prior to homogenization.

The characteristic properties of the pastes prepared according to the above Examples are determined and compared to those of products are prepared without the addition of maize grist or by using normal maize grist, respectively, starting from aestivum or durum wheat grist, respectively, in the presence or absence of eggs, respectively. The reference pastes serving as comparison are prepared by the process according to Example 1 from the corresponding starting materials. The starch fraction of normal maize flour contains 75% of amylopectin. The tests are carried out and the results evaluated according to the corresponding Hungarian standards Nos. 11919-78, 17673-79, 20500/1-72, 20500/2-80 and 20500/3-79, respectively.

The results are summarized in Table 1. In the Table the pastes are characterized by the total number of points of the organoleptic tests which is the sum of the number of points of the following four tests: external appearance (maximal number of points: 40); smell (maximal number of points: 10); taste (maximal number of points: 20); estate of the cooked paste (maximal number of points: 30).

The interval of the number of points of the organoleptic properties is disclosed, too.

TABLE I

| No. of test | 1 | 2 | 3 | 4 | 5 | 6 |
|---|---|---|---|---|---|---|
| No. of Example | — | — | — | 1 | 2 | 3 |
| Aestivum TL 50 I—II grist, % | 100 | 100 | 100 | 85 | 80 | 75 |
| Durum meal, % | — | — | — | — | — | — |
| Waxy hybrid maize grist, % | — | — | — | 15. | 20 | 25 |
| Normal maize flour, % | — | — | — | — | — | — |
| Eggs (egg-powder) No. | — | 2 | 4 | — | — | — |
| Cooking time, (minutes) | 12 | 13 | 14 | 11 | 10 | 9 |
| Swelling capacity, % | 152 | 157 | 160 | 170 | 172 | 175 |
| Cooking to rags, % | 2.5 | 1.0 | 0.5 | 0.5 | 1.0 | 1.5 |
| Cooking losses, % | 6.1 | 5.8 | 5.6 | 5.9 | 5.6 | 5.4 |
| Acid value, | 1.3—1.4 | 1.3—1.4 | 1.3—1.4 | 1.5—1.7 | 1.6—1.8 | 1.7—2.0 |
| Organoleptic properties Total No. of points | 68 | 83 | 89 | 87 | 92 | 86 |
| Interval | 60—70 | 80—90 | 85—90 | 85—90 | 90—95 | 85—90 |
| Brown index Bi | 34.99 | 34.85 | 35.20 | 32.94 | 30.75 | 29.25 |
| Yellow index Si | 15.86 | 16.77 | 18.10 | 19.93 | 22.80 | 24.80 |

**0 139 028**

TABLE I (Cont'd)

| No. of test | 7 | 8 | 9 | 10 | 11 | 12 |
|---|---|---|---|---|---|---|
| No. of Example | — | — | — | 4 | 5 | 6 |
| Aestivum TL 50 I—II grist, % | 85 | 75 | — | 70 | 85 | 75 |
| Durum meal, % | — | — | 100 | 15 | — | — |
| Waxy hybrid maize grist, % | — | — | — | 15 | 15 | .15 |
| Normal maize flour, % | 15 | 25 | — | — | — | — |
| Eggs (egg-powder) No. | — | — | — | — | 2 | 4 |
| Cooking time, (minutes) | 10 | 8 | 15 | 13 | 12 | 11 |
| Swelling capacity, % | 159 | 161 | 178 | 172 | 176 | 180 |
| Cooking to rags, % | 1.5 | 2.5 | — | 0.5 | 0.5 | 1.0 |
| Cooking losses, % | 6.2 | 7.0 | 4.8 | 5.1 | 5.7 | 5.4 |
| Acid value, | 1.8—2.1 | 1.9—2.3 | 1.8—2.2 | 2.0—2.3 | 1.6—1.7 | 1.7—1.9 |
| Organoleptic properties Total No. of points | 66 | 61 | 92 | 89 | 89 | 93 |
| Interval | 65—70 | 60—65 | 90—95 | 85—90 | 85—90 | 90—95 |
| Brown index, Bi | 33.70 | 33.15 | 32.81 | 31.97 | 32.10 | 31.05 |
| Yellow index, Si | 17.80 | 18.85 | 18.90 | 19.03 | 20.34 | 25.45 |

It appears from Table I that some characteristic features of the pastes prepared according to the present invention are similar to those of products obtained by conventional methods while other properties are significantly superior to them. Thus the cooking time of the paste prepared according to the present invention is shorter than that of conventional pastes and consequently they can be cooked with a smaller energy demand. The swelling capacity of the pastes according to the present invention reaches or exceeds that of conventional pastes. A further advantage of the process of the present invention is that the damages and losses occurring during cooking are significantly smaller. The highest improvement of the process of the present invention resides in the organoleptic properties and the external appearance of the paste. It is also of great importance that starting from aestivum wheat grist being less suitable for paste production or omitting the eggs, respectively, farinaceous products of such high quality can be obtained which could be hitherto prepared only when durum wheat grist, was used as starting material or eggs were added to the mixture.

**Claims**

1. Farinaceous product, characterized in that it comprises flour containing 5—40% by weight of a hybrid maize grist which has a starch fraction including at least 95% of amylopectin, water, optionally eggs and additives generally used in paste production.

2. Process for the manufacturing of farinaceous products according to claim 1 by admixing flour, water and optionally eggs and additives generally used in paste production and kneading, forming and optionally cooking and/or drying, characterized in that for paste production an amount of flour containing 5—40% by weight of a hybrid maize grist which has a starch fraction containing at least 95% of amylopectin is used.

**Patentansprüche**

1. Getreideprodukt, dadurch gekennzeichnet, daß es Mehl, enthaltend 5—40 Gew.-% eines Hybrid-Maismahlgutes, welches eine Stärkefraktion einschließend wenigstens 95% Amylopectin, enthält, Wasser, gewünschtenfalls Eier und Additive, wie sie üblicherweise bei der Teigherstellung verwendet werden, umfaßt.

**0 139 028**

2. Verfahren zur Herstellung eines Getreideproduktes gemäß Anspruch 1, bei dem man Mehl, Wasser und gewünschtenfalls Eier und Additive, die üblicherweise zur Teigherstellung verwendet werden, vermischt und verknetet, formt und gewünschtenfalls bäckt und/oder trocknet, dadurch gekennzeichnet, daß für die Teigherstellung eine Menge an Mehl, enthaltend 5—40 Gew.% eines Hybrid-Maismahlgutes, welches eine Stärkefraktion von wenigstens 95% an Amylopectin hat, verwendet wird.

**Revendications**

1. Produit farineux, caractérisé en ce qu'il comprend une farine contenant de 5 à 40% en poids d'une mouture de maïs hybride ayant une fraction amylacée contenant au moins 95% d'amylopectine, de l'eau, facultativement des oeufs et des additifs qu'on emploie en général dans la production des pâtes.

2. Procédé de fabrication de produits farineux selon la revendication 1, consistant à mélanger de la farine, de l'eau et facultativement des oeufs et des additifs qu'on emploie en général dans la production des pâtes et à pétrir, façonner et facultativement à cuire et/ou à sécher, caractérisé en ce que pour la production des pâtes on utilise une farine contenant de 5 à 40% en poids d'une mouture de maïs hybride ayant une fraction amylacée contenant au moins 95% d'amylopectine.